# EUROPEAN PATENT APPLICATION

(11) **EP 3 842 306 A1**
(43) Date of publication of application: **30.06.2021**
(21) Application number: 19851489.5
(22) Date of filing: 04.07.2019
(51) Int. Cl.: B60W 30/12, B60T 7/12, B60W 30/14, B60W 30/16, B60W 30/165, B62D 6/00, F02D 29/02, B62D 101/00, B62D 113/00

(54) **VEHICLE CONTROL DEVICE, VEHICLE CONTROL METHOD, AND VEHICLE CONTROL SYSTEM**

(30) Priority: 22.08.2018 JP 2018155230
(71) Applicant: Hitachi Astemo, Ltd., Hitachinaka-shi, Ibaraki 312-8503 (JP)
(72) Inventor: TAKAHAMA, Taku, Hitachinaka-shi, Ibaraki 312-8503 (JP)
(74) Representative: Hoefer & Partner Patentanwälte mbB
(86) International application number: PCT/JP2019/026614
(87) International publication number: WO 2020/039767

(57) **Abstract**

A vehicle control apparatus controls operations of a steering apparatus and a braking/driving apparatus to assist driving of a vehicle by an occupant on the vehicle including the steering apparatus configured to steer the vehicle and the braking/driving apparatus configured to brake/drive the vehicle. The vehicle control apparatus receives a single assistance request signal for requesting the assistance in the driving from the occupant, and transitions to an operation mode of assisting the driving. Then, the vehicle control apparatus receives perceived information acquired from an external world perception portion, determines a situation of a running road lying ahead of the vehicle based on this perceived information, determines a steering instruction for steering the vehicle based on the situation of the running road, determines a braking/driving instruction for braking/driving the vehicle based on the situation of the running road, and outputs the steering instruction toward the steering apparatus and outputs the braking/driving instruction toward the braking/driving apparatus.

## Description

### TECHNICAL FIELD

The present invention relates to a vehicle control apparatus for assisting driving of a vehicle, a vehicle control method, and a vehicle control system using this vehicle control apparatus.

### BACKGROUND ART

PTL 1 discusses a vehicle running control apparatus that is a combination of an inter-vehicle control-type constant-speed running system, which measures an inter-vehicle distance to a preceding vehicle and controls a throttle or a brake in such a manner that the measured value matches a target inter-vehicle distance, and a lane keeping system, which functions to keep the running subject vehicle within a traffic lane. This apparatus discussed in PTL 1 is configured to, when a switch for canceling the inter-vehicle control-type constant-speed running system is operated by a driver under a situation that both the systems are in operation, first hand over the longitudinal control to the driver according to the cancel of the inter-vehicle control-type constant-speed running system, and, subsequently thereto, hand over the lateral control to the driver while giving the driver enough time.

### CITATION LIST

### PATENT LITERATURE

PTL 1: Japanese Patent Application Public Disclosure No. 2005-306362

### SUMMARY OF INVENTION

### TECHNICAL PROBLEM

However, according to the above-described technique discussed in PTL 1, each of the driving assistance systems should be turned on/off using a dedicated switch therefor. Further, some of systems corresponding to this type of driving assistance function return to the assisting state according to a release of the accelerator when the vehicle is sped up by an accelerator operation, but cancel the assistance for the sake of safety when a brake operation is performed. Therefore, this technique has a problem of being less user-friendly for an inexperienced driver because becoming complicated and difficult to understand by, for example, necessitating a switch operation according to the driving situation and the assistance request and also necessitating a re-operation of the switch after the brake operation.

### SOLUTION TO PROBLEM

An object of the present invention is to provide a vehicle control apparatus and a vehicle control method that allow a plurality of driving assistance functions to be controlled with an intuitively easily understandable operation.

Further, another object of the present invention is to provide a vehicle control system that allows a plurality of driving assistance functions to be integrally actuated with an intuitively easily understandable operation.

To achieve the above-described objects, according to one aspect of the present invention, a vehicle control apparatus and a vehicle control method function to control operations of a steering apparatus and a braking/driving apparatus to assist driving of a vehicle by an occupant on the vehicle including the steering apparatus configured to steer the vehicle and the braking/driving apparatus configured to brake/drive the vehicle. For fulfilling this function, the vehicle control apparatus and the vehicle control method receive a single assistance request signal for requesting the assistance in the driving from the occupant, and transition to an operation mode of assisting the driving by the occupant in response to the single assistance request signal. Then, in the operation mode, the vehicle control apparatus and the vehicle control method receive perceived information acquired from an external world perception portion configured to perceive a situation of an external world around the vehicle, determine a situation of a running road lying ahead of the vehicle based on the perceived information, determine a steering instruction for steering the vehicle based on the situation of the running road, determine a braking/driving instruction for braking/driving the vehicle based on the situation of the running road, and output the steering instruction toward the steering apparatus and output the braking/driving instruction toward the braking/driving apparatus.

Further, according to one aspect of the present invention, a vehicle control system includes an external world perception portion configured to perceive a situation of an external world around a vehicle, a steering apparatus configured to steer the vehicle, a braking/driving apparatus configured to brake/drive the vehicle, and a control unit configured to control operations of the steering apparatus and the braking/driving apparatus to assist driving of the vehicle by an occupant. The control unit receives a single assistance request signal for requesting the assistance in the driving from the occupant, transitions to an operation mode of assisting the driving by the occupant in response to the single assistance request signal. Then, in the operation mode, the control unit receives perceived information acquired from the external world perception portion configured to perceive the situation of the external world around the vehicle, determines a situation of a running road lying ahead of the vehicle based on the perceived information, determines a steering instruction for steering the vehicle based on the situation of the running road, determines a braking/driving instruction for braking/driving the vehicle based on the situation of the running road, and outputs the steering instruction toward the steering apparatus and outputs the braking/driving instruction toward the braking/driving apparatus.

### ADVANTAGEOUS EFFECTS OF INVENTION

According to the one aspect of the present invention, because lateral control and longitudinal control are caused to function simultaneously by transitioning to the operation mode of assisting the driving according to the single assistance request signal for requesting the assistance in the driving from the occupant, and outputting the steering instruction toward the steering apparatus and outputting the braking/driving instruction toward the braking/driving apparatus, the plurality of driving assistance functions can be actuated and stopped with the intuitively easily understandable operation.

Further, according to one aspect of the present invention, due to the provision of the control unit that transitions to the operation mode of assisting the driving according to the single assistance request signal for requesting the assistance in the driving from the occupant, and outputs the steering instruction toward the steering apparatus and outputs the braking/driving instruction toward the braking/driving apparatus, the plurality of driving assistance functions can be integrally actuated and stopped with the intuitively easily understandable operation.

### BRIEF DESCRIPTION OF DRAWINGS

Fig. 1 schematically illustrates the configuration of a vehicle control system according to an embodiment of the present invention.
Fig. 2 is a block diagram illustrating a vehicle control apparatus according to the embodiment of the present invention.
Fig. 3 is a flowchart illustrating a vehicle control method according to the embodiment of the present invention.
Fig. 4 illustrates the control states of a steering apparatus and a braking/driving apparatus according to the presence/absence of a preceding vehicle and the presence/absence of a white line.

### DESCRIPTION OF EMBODIMENTS

In the following description, an embodiment of the present invention will be described with reference to the drawings.

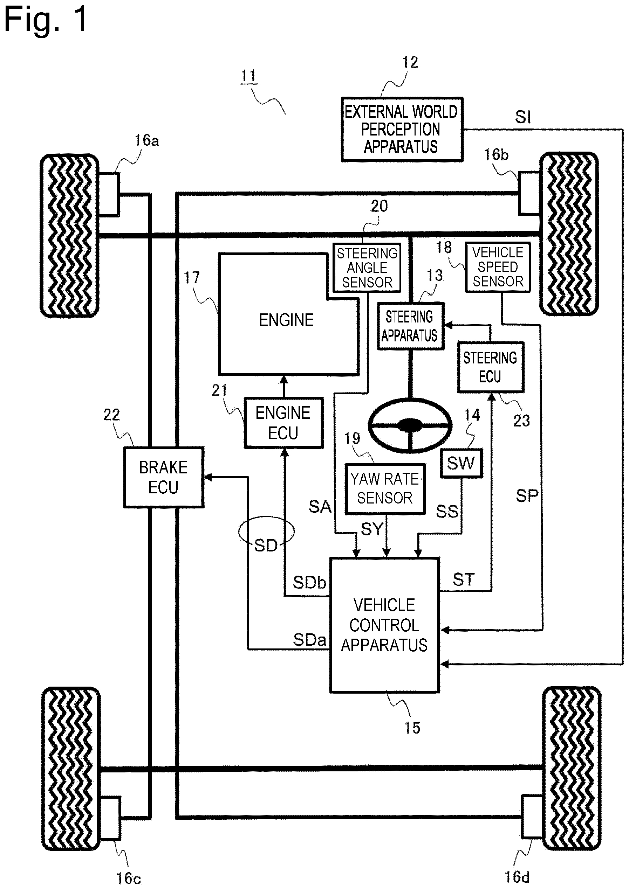

Fig. 1 schematically illustrates the configuration of a vehicle control system according to the embodiment of the present invention. This vehicle control system includes an external world perception apparatus (an external world perception portion) 12, a steering apparatus 13, a braking/driving apparatus, a switch (a single operation portion) 14, and a vehicle control apparatus (a control unit) 15. The external world perception apparatus 12 perceives the situation of the external world around the vehicle 11. The steering apparatus 13 steers this vehicle 11. The switch 14 generates a single assistance request signal SS for requesting assistance in driving from an occupant. The vehicle control apparatus 15 functions to control the operations of the steering apparatus 13 and the braking/driving apparatus to assist the occupant's driving of the vehicle 11.

As will be used herein, the braking/driving apparatus refers to a combination of a braking function and a driving function, like a braking apparatus (brakes 16a to 16d, a motor regenerator, or the like) and a driving apparatus (an engine 17, a motor, or the like). Further, the switch 14 is a switch for turning on/off a so-called "autonomous driving level 2" function, and generates the assistance request signal SS in response to the operation of switching on it and inputs the generated signal to the vehicle control apparatus 15. The operation of switching off the switch 14 works as an assistance stop signal. This switch 14 can be embodied by any of various types of switches that generate a signal for requesting assistance in both steering and braking/driving the vehicle 11, such as various operation switches, a detection switch that detects a motion of something, and an audio input microphone.

Further, a vehicle speed signal SP, a yaw rate signal SY, and a steering angle signal SA are input from a vehicle speed sensor 18, a yaw rate sensor 19, and a steering angle sensor 20 to the vehicle control apparatus 15, respectively. Then, this vehicle control apparatus 15 outputs braking/driving instructions SD (a driving instruction SDb and a braking instruction SDa) to an engine ECU 21, which controls the engine 17, and a brake ECU 22, which controls the brakes 16a to 16d, respectively, and also outputs a steering instruction ST to a steering ECU 23, which controls the steering apparatus 13.

The above-described vehicle control apparatus 15 is configured to receive the single assistance request signal SS for requesting the assistance in the driving, which is generated by the occupant's operating the switch 14, and transition to an operation mode of assisting the driving in response to this assistance request signal SS.

In this operation mode, the vehicle control apparatus 15 receives perceived information SI acquired from the external world perception apparatus 12, and determines the situation of the running road lying ahead of the vehicle 11 (in the traveling direction) based on this perceived information SI. The perceived information SI includes information regarding a preceding vehicle (a leading vehicle) running ahead of the vehicle 11, and information regarding the shape of the running road lying ahead of the vehicle 11. The situation of the running road includes whether the preceding vehicle is present/absent based on the information regarding the preceding vehicle, and whether the shape of the running road can be acquired or not based on the information regarding the shape of the running road. This shape of the running road specifically means a white line (a lane marker), but is not limited thereto and may be a curb, a gutter, or the like as long as it can be used to determine the traffic lane (the course) in which the vehicle 11 should run.

Further, the vehicle control apparatus 15 determines the steering instruction ST for steering the vehicle 11 and also determines the braking/driving instructions SD for braking and driving the vehicle 11 based on the above-described situation of the running road. At this time, the vehicle control apparatus 15 determines the braking/driving instructions SD based on an inter-vehicle distance between the vehicle 11 and the preceding vehicle if perceiving that the preceding vehicle is present, and determines the braking/driving instructions SD for maintaining a predetermined speed if perceiving that the preceding vehicle is absent.

In other words, the vehicle control apparatus 15 determines the steering instruction ST for running along the shape of the running road if the shape of the running road can be acquired, and determines the steering instruction ST for following the running route of the preceding vehicle if the preceding vehicle is present and the shape of the running road cannot be acquired.

On the other hand, the vehicle control apparatus 15 prohibits (suspends) the outputs of the steering instruction ST and the braking/driving instructions SD if the preceding vehicle is absent and the shape of the running road cannot be acquired.

When a brake operation or an accelerator operation is performed by the occupant during the inter-vehicle distance control or the vehicle speed control, the setting of the inter-vehicle distance control or the vehicle speed control is corrected based on these pedal operations. For example, when the brake operation is performed and the distance to the preceding vehicle increases, the setting of the inter-vehicle distance is corrected to a larger value. When the accelerator operation is performed after that, the inter-vehicle distance control and/or the vehicle speed control is performed to follow the preceding vehicle with the inter-vehicle distance set to the larger value.

On the other hand, when the accelerator operation is performed and the distance to the preceding vehicle reduces, the setting of the inter-vehicle distance is corrected to a smaller value. When the brake operation is performed, the inter-vehicle distance control and/or the vehicle speed control is performed to follow the preceding vehicle with the inter-vehicle distance set to the smaller value.

Further, if the vehicle 11 transitions from the state in which the outputs of the steering instruction ST and the braking/driving instructions SD are prohibited to the state in which the preceding vehicle is present and the shape of the running road cannot be acquired, the vehicle control apparatus 15 determines the braking/driving instructions SD based on the inter-vehicle distance between the vehicle 11 and the preceding vehicle, and determines the steering instruction ST for following the running route of the preceding vehicle so as to cause the vehicle 11 to mildly follow the preceding vehicle for a predetermined time after the transition. The vehicle control apparatus 15 causes the vehicle 11 to mildly follow the preceding vehicle, which means allowing the vehicle 11 to slowly follow the running route of the preceding vehicle by, for example, reducing a control gain used when driving the actuator of the steering apparatus 13 by the steering ECU 23 for a predetermined time (for example, 10 seconds) because the occupant would feel uncomfortable if the vehicle 11 rapidly follows the running route of the preceding vehicle. Alternatively, the vehicle control apparatus 15 may set a target value used when driving the actuator of the steering apparatus 13 by the steering ECU 23 so as to make the response mild.

Then, the vehicle control apparatus 15 outputs the steering instruction ST, the driving instruction SDb, and the braking instruction SDa toward the steering apparatus 13 (the steering ECU 23), the engine 17 (the engine ECU 21), and the brakes 16a to 16d (the brake ECU 22), respectively.

The outputs of these steering instruction ST and braking/driving instructions SD constantly continue until the occupant operates the switch 14 to end this operation mode or change the operation mode to another mode. In other words, the driving assistance functions are not canceled by the driver's brake operation, steering operation, and accelerator operation in the operation mode of assisting the driving.

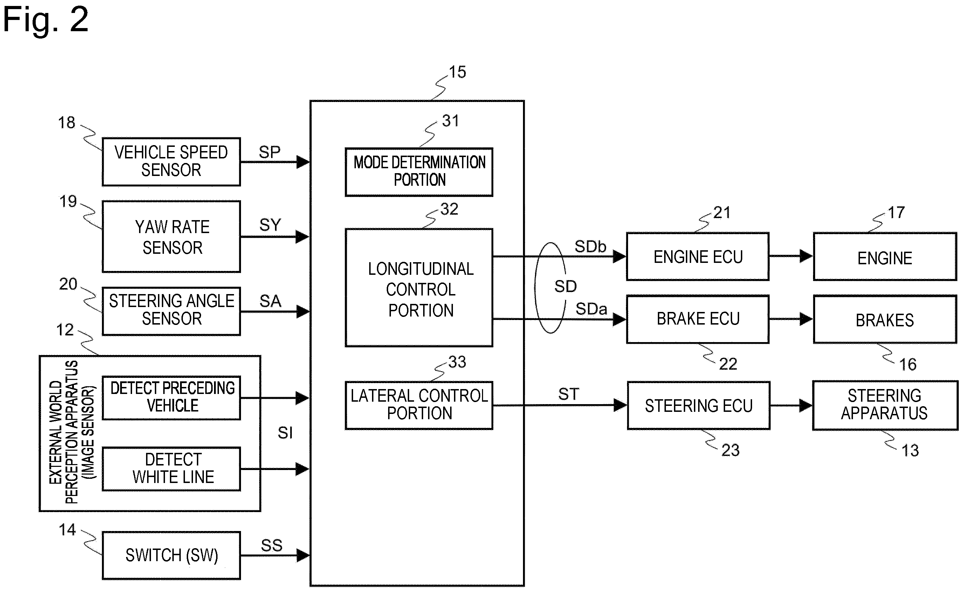

Fig. 2 illustrates the vehicle control apparatus according to the embodiment of the present invention, and is configured in such a manner that longitudinal and lateral control modes are simultaneously changed by the operation on the switch 14, which is the single operation portion, to facilitate a better understanding of the operation regarding the driving assistance functions of the autonomous driving level 2.

The vehicle speed signal SP, the yaw rate signal SY, and the steering angle signal SA detected by the vehicle speed sensor 18, the yaw rate sensor 19, and the steering angle sensor 20, respectively, are each input to the vehicle control apparatus 15. Further, the preceding vehicle is detected by an image sensor working as the external world perception apparatus 12, and, along therewith, the white line is detected and the situation of the external world is input to the vehicle control apparatus 15. The actuation/stop of the driving assistance functions by this vehicle control apparatus 15 is controlled by the operation on the switch 14.

The vehicle control apparatus 15 includes a mode determination portion 31, a longitudinal control portion 32, and a lateral control portion 33. The mode determination portion 31 functions to determine the control modes of the longitudinal control and the lateral control mode. The longitudinal control assists or substitutes for the occupant's control of the vehicle 11 in the longitudinal direction (ACC: Adaptive Cruise Control or ASCD: Auto Speed Control Device). The lateral control assists or substitutes for the occupant's control of the vehicle 11 in the lateral direction (LK: Lane Keeping Control).

The longitudinal control portion 32 calculates the braking/driving instructions SD (the braking instruction SDa and the driving instruction SDb) for braking/driving the vehicle 11 based on the situation of the running road to perform the longitudinal control. The longitudinal control portion 32 outputs the calculated braking instruction SDa and driving instruction SDb to the engine ECU 21 and the brake ECU 22, respectively, thereby controlling the engine 17 and the brake 16.

The lateral control portion 33 calculates the steering instruction ST for steering the vehicle 11 based on the situation of the running road to perform the lateral control. The lateral control portion 22 outputs the calculated steering instruction ST to the steering ECU 23, thereby controlling the steering apparatus 13.

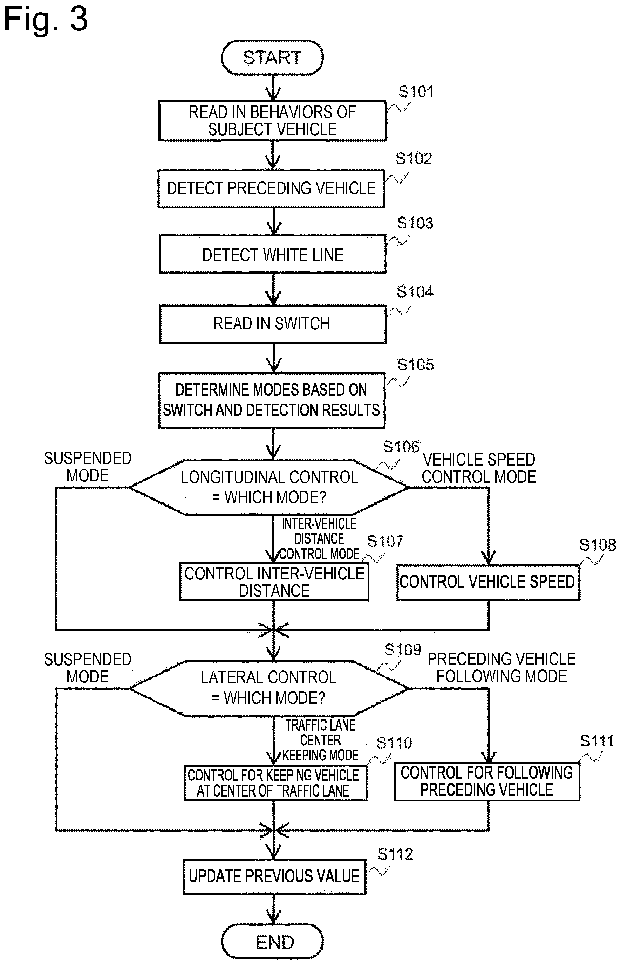

Next, a vehicle control method by the vehicle control apparatus 15 configured in the above-described manner will be described with reference to a flowchart illustrated in Fig. 3. The processing illustrated in this flowchart of Fig. 3 is repeatedly performed at a time interval of, for example, 50 msec by the vehicle control apparatus 15.

First, in step S101, the vehicle control apparatus 15 reads in the vehicle speed signal SP, the yaw rate signal SY, and the steering angle signal SA, which are the behavior of the subject vehicle, from the vehicle speed sensor 18, the yaw rate sensor 19, and the steering angle sensor 20, respectively.

In the next step, step S102, the vehicle control apparatus 15 captures an image in front of the vehicle 11 by the image sensor (a stereo camera) working as the external world perception apparatus 12, and detects the longitudinal position and the lateral position of the preceding vehicle that the subject vehicle follows.

In step S103, the vehicle control apparatus 15 perceives the white line (the lane marker) of the running traffic lane from the video image captured by the external world perception apparatus 12, and detects the lateral position from the center of the traffic lane, the yaw angle, and the shape of the road (the curvature).

Subsequently, in step S104, the vehicle control apparatus 15 reads in the state of the switch 14, which collectively turns on/off a plurality of driving assistance functions, in particular, the steering control and the braking/driving control in the present example. This switch 14 is configured not to be canceled while the vehicle is in operation once being switched on according to the operation performed by the occupant, unless the occupant performs the operation of switching off it (except for a failure or an abnormal state).

In step S105, the vehicle control apparatus 15 determines which modes should be set for the longitudinal control and the lateral control, respectively, based on the state of the switch 14, the result of the detection of the longitudinal position and the lateral position of the preceding vehicle, and the result of the detection of the lateral position of the subject vehicle from the center of the traffic lane, the yaw angle, and the shape of the road.

Then, the vehicle control apparatus 15 suspends the control (put the control on standby) only if the shape of the road (for example, the white line) is undetectable by the external world perception apparatus 12 and the preceding vehicle is also undetectable, and otherwise causes the longitudinal control and the lateral control to function together. The constant vehicle speed control is performed if the preceding vehicle is undetectable in the normal longitudinal control, but the vehicle control apparatus 15 is configured to suspend the control if both the preceding vehicle and the shape of the road are undetectable and perform the constant vehicle speed control when only the shape of the road is detectable in the present embodiment.

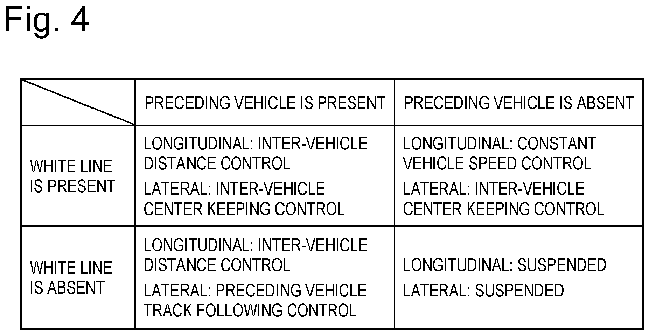

This will be described in further detail. As illustrated in Fig. 4, if the white line is present (detected) and the preceding vehicle is also present (detected), the vehicle control apparatus 15 performs the inter-vehicle distance control and also performs the traffic lane center keeping control. On the other hand, if the white line is present and the preceding vehicle is absent, the vehicle control apparatus 15 performs the constant vehicle speed control and also performs the traffic lane center keeping control. On the other hand, if the white line is absent and the preceding vehicle is present, the vehicle control apparatus 15 performs the inter-vehicle distance control and also performs the preceding vehicle track following control. On the other hand, if the white line is absent and the preceding vehicle is also absent, the vehicle control apparatus 15 does not perform the longitudinal control and the lateral control and suspend them (put them on standby) until the white line or the preceding vehicle is detected. Then, when the white line or the preceding vehicle is detected, the vehicle control apparatus 15 returns to the above-described control operation according to the presence/absence of the white line and the presence/absence of the preceding vehicle.

In this manner, the longitudinal control and the lateral control constantly simultaneously function and are turned on/off by the switch 14, which is the single operation portion mounted on the vehicle, and are not canceled by a means other than that, such as even an input of an operation on the brake or the accelerator. Therefore, the present embodiment allows even an inexperienced driver to easily understand how to use it, and can eliminate such complication that the control is not turned off even when an accelerator operation intervenes but is turned off by a brake operation.

Further, the present embodiment causes the longitudinal control and the lateral control to simultaneously function if an object corresponding to the traffic lane such as the white line is detectable or if the preceding vehicle is detectable. On the other hand, the present embodiment suspends the longitudinal control and the lateral control simultaneously (puts them on standby) if an object corresponding to the traffic lane is undetectable and the preceding vehicle is also undetectable. In this manner, the present embodiment performs the longitudinal control and the lateral control simultaneously if the white line or the preceding vehicle is detectable and suspends them if both are undetectable, and therefore the mechanism of the control system (the transition of the state) is easily understandable.

Further, the function of the longitudinal control performs the inter-vehicle distance control if the preceding vehicle is detected and performs the vehicle speed control if an object corresponding to the traffic lane is detected, and therefore the mechanism of the control system (the transition of the state) is also easily understandable in light of that.

As described above, it is useful to weaken the lateral control only for a predetermined time when only the preceding vehicle is detected from the suspended state. For example, when a vehicle is merging into the traffic lane where the subject vehicle is running from the left traffic lane or the right traffic lane with both the white line and the preceding vehicle undetectable, this leads to a start of the lateral control from a situation disadvantageous for the lateral control because the longitudinal control and the lateral control are recovered simultaneously.

Such a case may lead to the control regarding the white line in conformity with the driver's operation immediately before that but lead to the control regarding the preceding vehicle inconsistent with the driver's operation immediately before that, thereby easily resulting in wobbling steering or the like with an increase in the lateral control amount, and thus making the driver feel uncomfortable. Therefore, weakening the lateral control only for the predetermined time prevents the vehicle 11 from hyper-sensitively responding to the lateral motion of the preceding vehicle running ahead. The lateral control can be weakened by, for example, correcting the steering torque to feed to the actuator of the steering apparatus 13 so as to reduce it and outputting the steering instruction ST from the vehicle control apparatus 15 to the steering ECU 23 to control it.

Further, in the longitudinal control and the lateral control like the above-described example illustrated in Fig. 4, the inter-vehicle distance and the vehicle speed according to the driver's brake operation and accelerator operation immediately before that, the steering angle according to the driver's steering operation immediately before that, and the like are stored into, for example, a storage device (not illustrated) of the vehicle control apparatus 15, and is sequentially updated as time goes by. Then, the latest information is used for the calculation for performing the various kinds of control. Alternatively, the latest information is used for the calculation for performing the various kinds of control after being corrected as necessary.

In step S106, the vehicle control apparatus 15 determines which mode is set for the longitudinal control, the inter-vehicle distance control mode, the vehicle speed control mode, or the suspended mode. Then, the processing proceeds to step S107, step S108, and step S109, if the longitudinal control mode is the inter-vehicle distance control mode, the vehicle speed control mode, and the suspended mode, respectively.

In step S107, the vehicle control apparatus 15 sets the inter-vehicle distance to the preceding vehicle to a desired distance by controlling the inter-vehicle distance. Known various kinds of control can be employed for the inter-vehicle distance control, and, for example, the vehicle control apparatus 15 perceives the situation of the running road ahead of the vehicle 11 by the external world perception apparatus 12 and controls the inter-vehicle distance to the preceding vehicle appropriately. Further, the vehicle control apparatus 15 determines a slope of the positions of the preceding vehicle and the subject vehicle and calculates an inter-vehicle distance predicted to reduce or increase due to the slope, and feeds an inter-distance vehicle in which the predicted change amount of the inter-vehicle distance is reflected to the longitudinal control portion 32 as a target inter-vehicle distance. The vehicle control apparatus 15 outputs the driving instruction SDb and the braking instruction SDa from this longitudinal control portion 32 to the engine ECU 21 and the brake ECU 22, thereby correctively controlling the engine 17 and the brake 16, respectively.

In step S108, the vehicle control apparatus 15 controls the vehicle speed, thereby causing the subject vehicle to run at a vehicle speed equal to the set vehicle speed. Known various kinds of control can also be employed for this vehicle speed control. When not only simply causing the subject vehicle to run at a constant speed according to the set vehicle speed but also controlling the running according to, for example, a first target speed, the vehicle control apparatus 15 continues the acceleration and the deceleration so as to cause the subject vehicle to run at the first target speed when perceiving that the vehicle speed should be changed (reduced) from the first target speed to a second target speed at a predetermined spot located ahead of the subject vehicle. By applying the engine brake after that, the vehicle control apparatus 15 can control the vehicle speed of the subject vehicle so as to achieve the second target speed at the predetermined spot.

In step S109, the vehicle control apparatus 15 determines which mode is set for the lateral control, the traffic lane center keeping mode, the preceding vehicle following mode, or the suspended mode. Then, the processing proceeds to step S110, step Sill, and step S112, if the lateral control mode is the traffic lane center keeping mode, the preceding vehicle following mode, and the suspended mode, respectively.

In step S110, the vehicle control apparatus 15 allows the vehicle 11 to be kept running around the center of the running traffic lane by performing the traffic lane center keeping control of perceiving the white line by the external world perception apparatus 12 and controlling the steering so as to keep the vehicle at the center of the traffic lane. Known various kinds of control can be employed for this traffic lane center keeping control. For example, when a protruding object is installed on the white line, the vehicle control apparatus 15 can perform the traffic lane center keeping control by detecting the white line with the protruding object installed thereon, issuing a traffic lane departure warning timing with respect to the white line with the protruding object detected thereon earlier than normal, and setting the position offset from the center of the traffic lane to the opposite side away from this white line as the target position.

In step S111, the vehicle control apparatus 15 outputs the steering instruction ST to the steering ECU 23, which controls the steering apparatus 13, to control it so as to cause the subject vehicle to follow the running track of the preceding vehicle detected by the external world perception apparatus 12. Known various kinds of control can be employed for this preceding vehicle following control. For example, the movement track can be estimated with improved accuracy by appropriately adjusting the registered positions of the longitudinal position and the lateral position of the preceding vehicle that are registered for the calculation of the running track according to the speed of the subject vehicle and the inter-vehicle distance to the preceding vehicle.

In a case where the previous lateral control mode is suspended, it is useful to set a low gain as the gain for driving the actuator of the steering apparatus 13 only for a predetermined time, such as 10 seconds. This can prevent the driver from feeling uncomfortable with his/her steering operation due to the sudden suspension of the control when the preceding vehicle disappears.

In step S112, the vehicle control apparatus 15 updates a previous value used for a low-pass filter calculation for smoothing a sensor value containing a noise component by a large amount, such as the yaw rate sensor 19 of the subject vehicle.

In this manner, the present embodiment can assist the driving without invoking an unconformable feeling while prioritizing the operation on the switch 14 and the occupant's driving. Further, the present embodiment controls both the longitudinal direction and the lateral direction at the same timing, thereby allowing the lateral control and the longitudinal control to be integrally actuated with an intuitively easily understandable operation. In addition, the present embodiment allows the actuation and the stop of the plurality of driving assistance functions to be controlled by the single operation portion while utilizing the existing sensors and control apparatuses, thereby allowing the system to be constructed at low cost.

The present invention is not limited to the above-described embodiment, and can be implemented while being modified in various manners. For example, the inter-vehicle distance control, the vehicle speed control, the traffic lane center keeping control, and the preceding vehicle following control have been described referring to one example thereof, but are not limited thereto.

Further, the above-described embodiment has been described assuming that the image sensor (the stereo camera) is used as the external world perception apparatus 12 by way of example, but combining a radar and a laser allows the preceding vehicle, the obstacle, and the like to be further redundantly and robustly detected.

Further, detecting the positional information with use of a GPS or the like and taking it into consideration allows the situation of the running road lying ahead of the vehicle 11, such as the shape of the road (the curvature and the slope), to be predicted in advance, thereby allowing the steering control and the braking/driving control to be performed on the vehicle 11 while giving the driver enough time.

The present invention shall not be limited to the above-described embodiments, and includes various modifications. For example, the above-described embodiments have been described in detail to facilitate a better understanding of the present invention, and the present invention shall not necessarily be limited to the configuration including all of the described features. Further, a part of the configuration of some embodiment can be replaced with the configuration of another embodiment. Further, some embodiment can also be implemented with a configuration of another embodiment added to the configuration of this embodiment. Further, each of the embodiments can also be implemented with another configuration added, deleted, or replaced with respect to a part of the configuration of this embodiment.

The present application claims priority under the Paris Convention to Japanese Patent Application No. 2018-155230 filed on August 22, 2018. The entire disclosure of Japanese Patent Application No. 2018-155230 filed on August 22, 2018 including the specification, the claims, the drawings, and the abstract is incorporated herein by reference in its entirety.

### REFERENCE SIGNS LIST

- 11: vehicle
- 12: external world perception apparatus (external world perception portion)
- 13: steering apparatus
- 14: switch (single operation portion)
- 15: vehicle control apparatus (control unit)
- 16, 16a to 16d: brake (braking apparatus)
- 17: engine (driving apparatus)
- 18: vehicle speed sensor
- 19: yaw rate sensor
- 20: steering angle sensor
- 21: engine ECU
- 22: brake ECU
- 23: steering ECU
- 31: mode determination portion
- 32: longitudinal control portion
- 33: lateral control portion
- SS: single assistance request signal
- ST: steering instruction
- SI: perceived information
- SDa: braking instruction
- SDb: driving instruction
- SD: braking/driving instruction
- SP: vehicle speed signal
- SY: yaw rate signal
- SA: steering angle signal

## Claims

1. A vehicle control apparatus, the vehicle control apparatus being configured to control operations of a steering apparatus and a braking/driving apparatus to assist driving of a vehicle by an occupant on the vehicle, the vehicle including the steering apparatus configured to steer the vehicle and the braking/driving apparatus configured to brake/drive the vehicle,
wherein the vehicle control apparatus receives a single assistance request signal for requesting the assistance in the driving from the occupant,
transitions to an operation mode of assisting the driving by the occupant in response to the single assistance request signal, and,
in the operation mode,
receives perceived information acquired from an external world perception portion configured to perceive a situation of an external world around the vehicle,
determines a situation of a running road lying ahead of the vehicle based on the perceived information,
determines a steering instruction for steering the vehicle based on the situation of the running road,
determines a braking/driving instruction for braking/driving the vehicle based on the situation of the running road, and
outputs the steering instruction toward the steering apparatus and outputs the braking/driving instruction toward the braking/driving apparatus.

2. The vehicle control apparatus according to claim 1, wherein the perceived information includes information regarding a preceding vehicle running ahead of the vehicle, and information regarding a shape of the running road lying ahead of the vehicle, and
wherein the situation of the running road includes whether the preceding vehicle is present/absent based on the information regarding the preceding vehicle, and whether the shape of the running road can be acquired or not based on the information regarding the shape of the running road.

3. The vehicle control apparatus according to claim 2, wherein the vehicle control apparatus determines the braking/driving instruction based on an inter-vehicle distance between the vehicle and the preceding vehicle if the preceding vehicle is present, and
determines the braking/driving instruction for maintaining a predetermined speed if the preceding vehicle is absent.

4. The vehicle control apparatus according to claim 3, wherein the vehicle control apparatus determines the steering instruction for running along the shape of the running road if the shape of the running road can be acquired, and
determines the steering instruction for following a running route of the preceding vehicle if the shape of the running road cannot be acquired.

5. The vehicle control apparatus according to claim 2, wherein the vehicle control apparatus prohibits the outputs of the steering instruction and the braking/driving instruction if the preceding vehicle is absent and the shape of the running road cannot be acquired.

6. The vehicle control apparatus according to claim 2, wherein, if the vehicle transitions from a state in which the outputs of the steering instruction and the braking/driving instruction are prohibited to a state in which the preceding vehicle is present and the shape of the running road cannot be acquired,
the vehicle control apparatus determines the braking/driving instruction based on an inter-vehicle distance between the vehicle and the preceding vehicle, and
determines the steering instruction for following a running route of the preceding vehicle in such a manner that the vehicle mildly follows the running route of the preceding vehicle for a predetermined time after the transition.

7. The vehicle control apparatus according to claim 1, wherein the vehicle control apparatus receives a single assistance cancel signal for requesting cancel of the assistance in the driving from the occupant, and
ends processing in the operation mode in response to receiving the single assistance cancel signal.

8. The vehicle control apparatus according to claim 1, wherein the single assistance request signal is a signal generated based on an operation of switching on a single operation portion mounted on the vehicle.

9. A vehicle control method for controlling operations of a steering apparatus and a braking/driving apparatus to assist driving of a vehicle by an occupant on the vehicle, the vehicle including the steering apparatus configured to steer the vehicle and the braking/driving apparatus configured to brake/drive the vehicle, the vehicle control method comprising:
receiving a single assistance request signal for requesting the assistance in the driving from the occupant,
transitioning to an operation mode of assisting the driving by the occupant in response to the single assistance request signal, and
in the operation mode,
receiving perceived information acquired from an external world perception portion configured to perceive a situation of an external world around the vehicle,
determining a situation of a running road lying ahead of the vehicle based on the perceived information,
determining a steering instruction for steering the vehicle based on the situation of the running road,
determining a braking/driving instruction for braking/driving the vehicle based on the situation of the running road, and
outputting the steering instruction toward the steering apparatus and outputting the braking/driving instruction toward the braking/driving apparatus.

10. A vehicle control system comprising:
an external world perception portion configured to perceive a situation of an external world around a vehicle;
a steering apparatus configured to steer the vehicle;
a braking/driving apparatus configured to brake/drive the vehicle; and
a control unit configured to control operations of the steering apparatus and the braking/driving apparatus to assist driving of the vehicle by an occupant,
wherein the control unit receives a single assistance request signal for requesting the assistance in the driving from the occupant,
transitions to an operation mode of assisting the driving by the occupant in response to the single assistance request signal, and
in the operation mode,
receives perceived information acquired from the external world perception portion configured to perceive the situation of the external world around the vehicle,
determines a situation of a running road lying ahead of the vehicle based on the perceived information,
determines a steering instruction for steering the vehicle based on the situation of the running road,
determines a braking/driving instruction for braking/driving the vehicle based on the situation of the running road, and
outputs the steering instruction toward the steering apparatus and outputs the braking/driving instruction toward the braking/driving apparatus.
